# EUROPÄISCHE PATENTSCHRIFT

(11) **EP 1 450 016 B1**
(45) Veröffentlichungstag und Bekanntmachung des Hinweises auf die Patenterteilung: **20.07.2005**
(21) Anmeldenummer: 04001169.4
(22) Anmeldetag: 20.01.2004
(51) Int. Cl.: F01N 3/08, B01D 53/94

(54) **Verfahren zum Betrieb einer Brennkraftmaschine mit einer Abgasanlage mit zwei in Serie angeordneten NOx-Speicherkatalysatoren**
Engine control method having an exhaust system comprising two NOx-catalysts in series
Procédé de commande d'un moteur à combustion avec une dispositif d'échappement comprenant deux catalyseurs en séries à accumulateur de NOx

(30) Priorität: 21.02.2003 DE 10307338
(43) Veröffentlichungstag der Anmeldung: 25.08.2004
(73) Patentinhaber: Bayerische Motoren Werke Aktiengesellschaft, 80809 München (DE)
(72) Erfinder: Müller, Peter, 81673 München (DE); Preuss, Florian, Dr., 80809 München (DE); Detterbeck, Stefan, 80807 München (DE); Ramatschi, Stephan, 85604 Zorneding (DE)

(56) Entgegenhaltungen:
- EP-A- 1 152 140
- DE-A- 19 918 756
- US-A- 5 657 625
- US-B1- 6 471 924

## Beschreibung

Die Erfindung betrifft ein Verfahren zum Betrieb einer Brennkraftmaschine gemäß den Merkmalen in den Oberbegriffen der Patentansprüche 1, 3 und 5 sowie eine Abgasanlage für den Betrieb der Brennkraftmaschine gemäß den Merkmalen im Oberbegriff des Patentanspruchs 8.

Zum technischen Umfeld der Erfindung wird auf das europäische Patent EP 0 540 280 B1 verwiesen. In diesem ist eine Abgasreinigungsanlage für Brennkraftmaschinen für mageren Betrieb, d. h. Betrieb mit einem Luftüberschuss, beschrieben. Die Abgasreinigungsanlage, die an die Brennkraftmaschine angeordnet ist, umfasst hierbei zwei in einem Abgasstrang hintereinander angeordnete Stickoxid-Speicherkatalysatoren (NOx-Speicherkatalysator). Da NOx-Speicherkatalysatoren ab einer bestimmten Betriebstemperatur zwar Stickoxide einlagern können, jedoch erst ab einer höheren Temperatur Stickoxide umwandeln und wieder auslagern können, ist vor dem ersten Stickoxid-Speicherkatalysator eine Heizvorrichtung vorgesehen. Diese Heizvorrichtung dient dazu, den ersten NOx-Speicherkatalysator schneller auf seine hohe Betriebstemperatur bringen, um effektiv Stickoxide einlagern, umwandeln und wieder auslagern zu können. Des weiteren verfügt die Abgasanlage über eine Klappe vor den NOx-Speicherkatalysatoren, sowie über einen Bypass, der die Abgase, die von der Brennkraftmaschine kommen, je nach Klappenstellung um die NOx-Speicherkatalysatoren herum- bzw. hindurchleitet. Mit Hilfe der Klappe ist es auch möglich, die Abgasmenge zu regulieren, die durch die NOx-Speicherkatalysatoren hindurchgeleitet wird. Mit der vorgeschlagenen Abgasreinigungsanlage können die Magerbetriebsphasen der Brennkraftmaschine zeitlich ausgedehnt werden, um Kraftstoff einzusparen.

Nachteilig bei der beschriebenen Ausgestaltung im Stand der Technik ist der hohe apparative Aufwand der notwendig ist, um die Magerphasen der Brennkraftmaschine zu verlängern.

Aufgabe der vorliegenden Erfindung ist es, Verfahren zum Betrieb einer Brennkraftmaschine aufzuzeigen, bei denen es möglich ist, ohne großen apparativen Aufwand die Magerphasen zu verlängern und somit die Brennkraftmaschine möglichst wirtschaftlich zu betreiben.

Hierfür werden in den unabhängigen Verfahrensansprüchen drei Motorbetriebszustände optimiert:
- Patentanspruch 1: Kaltstart
- Patentanspruch 2: Warmstart
- Patentanspruch 3: Volllast- / Teillastbetrieb
- Der abhängige Patentanspruch 4 beschreibt eine Weiterbildung der vorhergehenden Patentansprüche.
- Der unabhängige Vorrichtungsanspruch 5 beschreibt die spezifische Abgasanlage.
- Die abhängigen Patentansprüche 6 bis 9 beschreiben Weiterbildungen von Patentanspruch 5.

Die Verfahren und die Vorrichtung der sind aus dem vorliegenden Stand der Technik weder bekannt noch nahe gelegt.

Gemäß Patentanspruch 1 kann die Brennkraftmaschine nach einem Start mit kalten NOx-Speicherkatalysatoren in vorteilhafter Weise von dem Moment an mit einem mageren Kraftstoff-Luft-Gemisch betrieben werden, sobald die Temperatur des ersten NOx-Speicherkatalysators über einer zweiten Aktivitätstemperatur liegt, da der NOx-Speicherkatalysator ab dieser Temperatur in der Lage ist, NOx einzulagem, zu reduzieren und wieder auszulagern. Für den praktischen Betrieb bedeutet dies, dass die Brennkraftmaschine weder mit einem stöchiometrischen Kraftstoff-Luft-Gemisch betrieben werden muss, bis beide NOx-Speicherkatalysatoren über der zweiten Aktivitätstemperatur liegen, noch eine zusätzliche Heizvorrichtung zum Aufheizen zumindest eines NOx-Speicherkatalysators notwendig ist. Der magere Betrieb mit Luftüberschuss kann somit sehr früh beginnen, wodurch Kraftstoff eingespart wird. Die Regeneration der NOx-Speicherkatalysatoren, d. h. das Auslagern von reduziertem NOx, kann von dem Moment an durchgeführt werden, sobald die Temperatur des ersten NOx-Speicherkatalysators über der zweiten Aktivitätstemperatur liegt.

Das Verfahren gemäß Patentanspruch 2, wenn vor einem Start der Brennkraftmaschine der erste NOx-Speicherkatalysator eine Temperatur unter der zweiten Aktivitätstemperatur und der zweite NOx-Speicherkatalysator eine Temperatur über der ersten Aktivitätstemperatur aufweist, zeichnet sich dadurch aus, dass nach dem Start der Brennkraftmaschine diese sofort mit einem mageren Kraftstoff-Luft-Gemisch betrieben werden kann. Auch für diesen Fall muss mit dem Betrieb mit einem mageren Kraftstoff-Luft-Gemisch nicht gewartet werden, bis beide NOx-Speicherkatalysatoren eine Temperatur über der zweiten Aktivitätstemperatur aufweisen. Auch dieses Verfahren verlängert die Betriebsdauer der Brennkraftmaschine mit einem mageren Kraftstoff-Luft-Gemisch wesentlich. Die Regeneration der NOx-Speicherkatalysatoren ist von dem Moment an möglich, wenn die Temperatur des zweiten NOx-Speicherkatalysators über der zweiten Aktivitätstemperatur liegt. Es ist nicht nötig, die Brennkraftmaschine mit einem stöchiometrischen Kraftstoff-Luft-Gemisch zu betreiben, bis beide NOx-Speicherkatalysatoren über der zweiten Aktivitätstemperatur sind.

Auch bei dem Verfahren gemäß Patentanspruch 3 werden längstmögliche Magerbetriebsphasen für die Brennkraftmaschine erreicht. Durch die Messung und Überprüfung der Temperatur eines jeden NOx-Speicherkatalysators ist es möglich, aufgrund der Wärmekapazitäten der einzelnen NOx-Speicherkatalysatoren, die mageren Betriebsphasen der Brennkraftmaschine möglichst lange zu halten. Bei dem Verfahren gemäß Patentanspruch 3 wird, wie auch bei den Verfahren gemäß Patentanspruch 1 und 2 der Effekt ausgenutzt, dass beide NOx-Speicherkatalysatoren exakt gleichzeitig auskühlen bzw. aufgeheizt werden. Durch die Anordnung der NOx-Speicherkatalysatoren in Strömungsrichtung hintereinander, erfahren die NOx-Speicherkatalysatoren praktisch nie dasselbe Aufheiz- bzw. Abkühlverhalten. Somit ist es möglich, durch die gezielte Temperaturüberwachung die Magerphasen der Brennkraftmaschine sowohl an die obere als auch an die untere Grenze zu fahren, in Abhängigkeit davon, ob zumindest ein NOx-Speicherkatalysator NOx aufnehmen, umwandeln oder wieder freigeben kann.

Gemäß Patentanspruch 4 kann für jedes der zuvor genannten Verfahren bei Bedarf jederzeit ein Katalysatorheizen durchgeführt werden.

Eine nochmalige Verlängerung der Magerphasen der Brennkraftmaschinen ist durch eine gattungsgemäße Abgasanlage mit den Merkmalen im kennzeichnenden Teil des Patentanspruchs 5 zu realisieren. Durch die vorgeschlagene Verteilung der Wärmekapazitäten wird ein schnelles Aufheizen des in Strömungsrichtung ersten NOx-Speicherkatalysators erreicht, wodurch ein sehr früher Magerbetrieb der Brennkraftmaschine möglich ist. Gleichzeitig ist ein langsames Abkühlen des zweiten NOx-Speicherkatalysators erreicht, wodurch eine Verlängerung des mageren Betriebs Brennkraftmaschine möglich ist. Dabei ist es unerheblich, ob die kleinere Wärmekapazität des ersten NOx-Speicherkatalysators durch eine geringere Trägermaterial und/oder eine geringere Beschichtungsdicke des Trägermaterials erzielt wird. Je nach Anwendung kann somit die optimale mechanische Ausgestaltung des NOx-Speicherkatalysators realisiert werden.

Eine weitere Möglichkeit, die Wärmekapazität des ersten NOx-Speicherkatalysators kleiner zu machen als des zweiten NOx-Speicherkatalysators besteht gemäß Patentanspruch 6 darin, das Volumen des ersten NOx-Speicherkatalysators kleiner zu machen.

Gemäß Patentanspruch 7 ist eine ständige Temperaturkontrolle beider NOx-Speicherkatalysatoren zur Steuerung der Brennkraftmaschine vorgesehen. Gemäß der Patentansprüche 8 und 9 können die NOx-Speicherkatalysatoren bei einer Temperatur oberhalb der ersten Aktivitätstemperatur NOx einlagern und/oder auslagern bzw. oberhalb der zweiten Aktivitätstemperatur NOx einlagern und/oder auslagern sowie konvertieren. Da die Aktivitätstemperaturen in erster Linie von der Beschichtung des Trägermaterials der NOx-Speicherkatalysatoren abhängt, können für unterschiedliche Beschichtungen unterschiedliche Aktivitätstemperaturen festgelegt und überwacht werden.

Im Folgenden sind die erfindungsgemäßen Verfahren sowie die erfindungsgemäße Vorrichtung anhand eines bevorzugten Ausführungsbeispieles näher erläutert.

Beim Betrieb einer Brennkraftmaschine, beispielsweise mit Benzin, Diesel, Erdgas oder Wasserstoff, als Direkt- oder Saugrohreinspritzer, besteht ein großes Kraftstoffeinsparpotential im mageren Betrieb der Brennkraftmaschine. Da bei magerem Betrieb jedoch aufgrund höherer Verbrennungstemperaturen Stickoxide erzeugt werden, ist zur Abgasreinigung ein NOx-Speicherkatalysator notwendig. Unter magerem Betrieb der Brennkraftmaschine wird ein Betrieb mit einem Kraftstoff-Luft-Verhältnis > 1 verstanden, ein stöchiometrischer Betrieb bedeutet ein Kraftstoff-Luft-Verhältnis von 1, ein fetter Betrieb bedeutet ein Kraftstoff-Luft-Verhältnis < 1. Die chemisch aktive Beschichtung eines NOx-Speicherkatalysators weist jedoch die Eigenschaft auf, dass sie oberhalb einer ersten Aktivitätstemperatur NOx einlagern, d. h. absorbieren und auch auslagern, d. h. desorbieren kann. Oberhalb dieser ersten Aktivitätstemperatur und unterhalb einer zweiten Aktivitätstemperatur ist der NOx-Speicherkatalysator jedoch nicht in der Lage, das NOx zu reduzieren und in unschädliches N₂, sowie andere chemische Komponenten umzuwandeln. Dies bedeutet, dass die NOx-Speicherkapazität des NOx-Speicherkatalysators über die Zeit verringert wird, wenn nicht die zweite Aktivitätstemperatur erreicht wird. Erst bei Temperaturen über der zweiten Aktivitätstemperatur kann durch kurzzeitiges Betreiben der Brennkraftmaschine mit einem fetten Kraftstoff-Luft-Gemisch der NOx-Speicherkatalysator regeneriert werden. Nach dieser Regeneration ist er wieder in der Lage, NOx einzulagern.

Im Folgenden werden Verfahren zum Betrieb einer Brennkraftmaschine geschildert, mit denen es möglich ist, die Magerphasen zu verlängern, um ein Kraftstoffeinsparpotential besser auszunutzen. Um die folgenden Verfahren durchführen zu können, weist die Abgasanlage einen ersten und in Strömungsrichtung dahinter einen zweiten NOx-Speicherkatalysator auf. Vorzugsweise weist der erste NOx-Speicherkatalysator eine kleinere Wärmekapazität als der zweite NOx-Speicherkatalysator auf. Im vorliegenden Ausführungsbeispiel ist die geringere Wärmekapazität dadurch erreicht, dass sowohl ein Volumen (Baugröße) des ersten NOx-Speicherkatalysators kleiner als des zweiten NOx-Speicherkatalysators ist, als auch ein Trägermaterial für eine Beschichtung eine geringere Materialstärke sowie die Beschichtungsdicke selbst geringer ist als die des zweiten NOx-Speicherkatalysators. In weiteren Ausführungsbeispielen können die Volumina des ersten NOx-Speicherkatalysators und des zweiten NOx-Speicherkatalysators gleich groß sein bzw. nur die Trägermaterial und/oder die Beschichtungsstärke von einander variieren. Auch ist es möglich, dass beide NOx-Speicherkatalysatoren in einem gemeinsamen Gehäuse angeordnet sind. Ferner weist zur Durchführung der Verfahren jeder NOx-Speicherkatalysator zumindest eine Temperaturmessstelle mit einem Temperaturmessfühler auf. In anderen Ausführungsbeispielen können die Temperaturen der NOx-Speicherkatalysatoren beispielsweise auch über Modellberechnungen beispielsweise in einem Steuergerät, ermittelt werden, oder in Kennfeldern abgelegt und aus diesen wieder ausgelesen werden. Die Beschichtungen der Trägermaterialien sowohl des ersten als auch des zweiten NOx-Speicherkatalysators weisen eine erste Aktivitätstemperatur und eine zweite Aktivitätstemperatur auf, die jeweils von der Beschichtung abhängig ist. Oberhalb der ersten Aktivitätstemperatur kann das Beschichtungsmaterial NOx sowohl einlagern als auch auslagern, d. h. absorbieren und desorbieren. Übersteigt die Temperatur eine zweite Aktivitätstemperatur, so kann das Beschichtungsmaterial NOx wohl einlagern und/oder auslagern und konvertieren. Die Konvertierung erfolgt hierbei, wie zuvor erwähnt, durch kurzzeitiges Betreiben der Brennkraftmaschine mit einem stöchiometrischen oder fetten Kraftstoff-Luft-Gemisch. Bei den Verfahren werden drei unterschiedliche Zustände, bzw. Temperaturniveaus der NOx-Speicherkatalysatoren betrachtet:
- beide NOx-Speicherkatalysatoren weisen eine Temperatur unter der ersten Aktivitätstemperatur auf, beispielsweise nach einem Kaltstart der Brennkraftmaschine,
- der erste NOx-Speicherkatalysator weist eine Temperatur unter der zweiten Aktivitätstemperatur und der zweite NOx-Speicherkatalysator eine Temperatur über der ersten Aktivitätstemperatur auf, beispielsweise nach einem Start der Brennkraftmaschine nach einem kurzen Stillstand,
- beide NOx-Speicherkatalysatoren weisen eine Temperatur über der zweiten Aktivitätstemperatur auf, beispielsweise während einer längeren Volllastphase der Brennkraftmaschine.

Beim dem ersten vorgeschlagenen Verfahren weisen beide NOx-Speicherkatalysatoren vor dem Start der Brennkraftmaschine eine Temperatur unter der ersten Aktivitätstemperatur auf. Nach einem Start der Brennkraftmaschine mit einem stöchiometrischen Kraftstoff-Luft-Gemisch wird die Temperatur des ersten NOx-Speicherkatalysators solange fortlaufend ermittelt, bis die Temperatur des ersten NOx-Speicherkatalysators über der zweiten Aktivitätstemperatur liegt. Überschreitet die Temperatur des ersten NOx-Speicherkatalysators die zweite Aktivitätstemperatur, kann die Brennkraftmaschine sofort mit einem mageren Kraftstoff-Luft-Gemisch betrieben werden. Sobald die Temperatur des ersten NOx-Speicherkatalysators über der zweiten Aktivitätstemperatur liegt, können beide NOx-Speicherkatalysatoren regeneriert werden.

Bei dem zweiten vorgeschlagenen Verfahren zum Betrieb einer Brennkraftmaschine weist vor dem Start der Brennkraftmaschine der erste NOx-Speicherkatalysator eine Temperatur unter der zweiten Aktivitätstemperatur und der zweite NOx-Speicherkatalysator eine Temperatur über der ersten Aktivitätstemperatur auf. Nach dem Start der Brennkraftmaschine, dies kann mit jedem Kraftstoff-Luft-Gemisch, mager oder fett oder stöchiometrisch, erfolgen, wird die Temperatur im zweiten NOx-Speicherkatalysator fortlaufend ermittelt. Da der zweite NOx-Speicherkatalysator bereits vor dem Start eine Temperatur über der ersten Aktivitätstemperatur aufweist, kann die Brennkraftmaschine sofort nach dem Start mit einem mageren Kraftstoff-Luft-Gemisch betrieben werden. Neben dem Betrieb der Brennkraftmaschine mit einem mageren Kraftstoff-Luft-Gemisch kann, solange die Temperatur des zweiten NOx-Speicherkatalysators über der zweiten Aktivitätstemperatur liegt, auch ständig eine Regeneration der NOx-Speicherkatalysatoren durchgeführt werden.

Bei dem dritten Verfahren zum Betrieb der Brennkraftmaschine mit der vorgeschlagenen Abgasanlage weisen beide NOx-Speicherkatalysatoren eine Temperatur über der zweiten. Aktivitätstemperatur auf. Dies kann in Ergänzung zu oben genannten Zustand, beispielsweise dann vorkommen, wenn nach einer längeren Volllaststrecke die Brennkraftmaschine abgestellt und gleich wieder gestartet wird. Bei diesem Betriebszustand wird fortlaufend die Temperatur des ersten NOx-Speicherkatalysators ermittelt und wenn die Temperatur des ersten NOx-Speicherkatalysators unter die zweite Aktivitätstemperatur fällt, wird fortlaufend die Temperatur des zweiten NOx-Speicherkatalysators ermittelt. Sobald die Temperatur des zweiten NOx-Speicherkatalysators über der zweiten Aktivitätstemperatur liegt, wird die Brennkraftmaschine mit einem mageren Kraftstoff-Luft-Gemisch betrieben. Wenn die Temperatur des zweiten NOx-Speicherkatalysators unter die zweite Aktivitätstemperatur fällt aber noch über der ersten Aktivitätstemperatur liegt, wird die Brennkraftmaschine ebenfalls mit einem mageren Kraftstoff-Luft-Gemisch betrieben. Auch für dieses Verfahren gilt, dass die NOx-Speicherkatalysatoren ständig regeneriert werden können, solange die Temperatur des zweiten NOx-Speicherkatalysators über der zweiten Aktivitätstemperatur liegt.

Bei allen drei Verfahren für die jeweiligen unterschiedlichen Betriebszustände, bzw. der jeweils unterschiedlichen Temperaturen der NOx-Speicherkatalysatoren kann bei Bedarf ein Katalysatorheizen durchgeführt werden. Das Katalysatorheizen kann entweder durch ein stöchiometrisches oder fettes Kraftstoff-Luft-Gemisch erfolgen. Durch diese Maßnahme wird erreicht, dass zumindest einer der NOx-Speicherkatalysatoren schnell eine Temperatur über der ersten Aktivitätstemperatur bzw. über der zweiten Aktivitätstemperatur annimmt.

Durch die erfindungsgemäßen Verfahren in Verbindung mit der vorgeschlagenen Abgasanlage wird ein früher Mager- bzw. Schichtbetrieb beim Aufheizen erzielt, sowie eine Verlängerung der verbrauchsgünstigen Mager- bzw. Schichtbetriebe für die Brennkraftmaschine beim Auskühlen, wodurch eine Verbrauchseinsparung zur besseren Ausnutzung von motorischen Verbrauchspotentialen erzielt wird.

## Patentansprüche

1. Verfahren zum Betrieb einer Brennkraftmaschine mit einer Abgasanlage nach einem Kaltstart, die einen ersten und in Strömungsrichtung dahinter einen zweiten NOx-Speicherkatalysator aufweist, wobei jeder NOx-Speicherkatalysator eine Wärmekapazität aufweist und die Wärmekapazität des ersten NOx-Speicherkatalysators kleiner der Wärmekapazität des zweiten NOx-Speicherkatalysators ist und wobei der NOx-Speicherkatalysator bei Temperaturen oberhalb einer ersten Aktivitätstemperatur NOx einlagert und/oder auslagert und wobei der NOx-Speicherkatalysator bei Temperaturen oberhalb einer zweiten Aktivitätstemperatur NOx einlagert und/oder auslagert und konvertiert, wenn vor einem Start der Brennkraftmaschine die Temperatur der NOx-Speicherkatalysatoren unter der ersten Aktivitätstemperatur ist, **gekennzeichnet durch** folgende Verfahrensschritte:
- Starten der Brennkraftmaschine mit einem stöchiometrischen Kraftstoff-Luft-Gemisch und fortlaufendes Ermitteln der Temperatur des ersten NOx-Speicherkatalysators,
- Betreiben der Brennkraftmaschine mit einem mageren Kraftstoff-/Luft-Gemisch, wenn die Temperatur des ersten NOx-Speicherkatalysators über der zweiten Aktivitätstemperatur liegt,
- Wenn die Temperatur des ersten NOx-Speicherkatalysators über der zweiten Aktivitätstemperatur liegt, Regenerieren der NOx-Speicherkatalysatoren.

2. Verfahren zum Betrieb einer Brennkraftmaschine mit einer Abgasanlage nach einem Warmstart, die einen ersten und in Strömungsrichtung dahinter einen zweiten NOx-Speicherkatalysator aufweist, wobei jeder NOx-Speicherkatalysator eine Wärmekapazität aufweist und die Wärmekapazität des ersten NOx-Speicherkatalysators kleiner der Wärmekapazität des zweiten NOx-Speicherkatalysators ist und wobei der NOx-Speicherkatalysator bei Temperaturen oberhalb einer ersten Aktivitätstemperatur NOx einlagert und/oder auslagert und wobei der NOx-Speicherkatalysator bei Temperaturen oberhalb einer zweiten Aktivitätstemperatur NOx einlagert und/oder auslagert und konvertiert, wenn vor einem Start der Brennkraftmaschine der erste NOx-Speicherkatalysator eine Temperatur unter der zweiten Aktivitätstemperatur und der zweite NOx-Speicherkatalysator eine Temperatur über der ersten Aktivitätstemperatur aufweist,
**gekennzeichnet durch** folgende Verfahrensschritte:
- Starten der Brennkraftmaschine und fortlaufendes Ermitteln der Temperatur des zweiten NOx-Speicherkatalysators,
- Betreiben der Brennkraftmaschine mit einem mageren Kraftstoff-/Luft-Gemisch,
- Wenn die Temperatur des zweiten NOx-Speicherkatalysator über der zweiten Aktivitätstemperatur liegt, Regenerieren der NOx-Speicherkatalysatoren.

3. Verfahren zum Betrieb einer Brennkraftmaschine mit einer Abgasanlage, die einen ersten und in Strömungsrichtung dahinter einen zweiten NOx-Speicherkatalysator aufweist, wobei jeder NOx-Speicherkatalysator eine Wärmekapazität aufweist und die Wärmekapazität des ersten NOx-Speicherkatalysators kleiner der Wärmekapazität des zweiten NOx-Speicherkatalysators ist und wobei der NOx-Speicherkatalysator bei Temperaturen oberhalb einer ersten Aktivitätstemperatur NOx einlagert und/oder auslagert und wobei der NOx-Speicherkatalysator bei Temperaturen oberhalb einer zweiten Aktivitätstemperatur NOx einlagert und/oder auslagert und konvertiert, wenn beide NOx-Speicherkatalysatoren eine Temperatur über der zweiten Aktivitätstemperatur aufweisen,
**gekennzeichnet durch** folgende Verfahrensschritte:
- Fortlaufendes Ermitteln der Temperatur des ersten NOx-Speicherkatalysators,
- Wenn die Temperatur des ersten NOx-Speicherkatalysators unter die zweite Aktivitätstemperatur fällt, fortlaufendes Ermitteln der Temperatur des zweiten NOx-Speicherkatalysators,
- Wenn die Temperatur des zweiten NOx-Speicherkatalysators über der zweiten Aktivitätstemperatur liegt, Betreiben der Brennkraftmaschine mit einem mageren Kraftstoff-/Luft-Gemisch,
- Wenn die Temperatur des zweiten NOx-Speicherkatalysators unter die zweite Aktivitätstemperatur fällt und über der ersten Aktivitätstemperatur liegt, Betreiben der Brennkraftmaschine mit einem mageren Kraftstoff /Luft-Gemisch,
- Wenn die Temperatur des zweiten NOx-Speicherkatalysators über der zweiten Aktivitätstemperatur liegt, Regenerieren der NOx-Speicherkatalysatoren.

4. Verfahren nach einem der zuvor genannten Patentansprüche,
**dadurch gekennzeichnet, dass** bei Bedarf ein Katalysatorheizen durchgeführt wird.

5. Abgasanlage für den Betrieb einer Brennkraftmaschine nach einem der zuvor genannten Patentansprüche, wobei jeder NOx-Speicherkatalysator eine Wärmekapazität aufweist, wobei die Wärmekapazität des ersten NOx-Speicherkatalysators kleiner der Wärmekapazität des zweiten NOx-Speicherkatalysators ist und wobei die NOx-Speicherkatalysatoren zumindest aus einem Trägermaterial mit einer Beschichtung bestehen,
**dadurch gekennzeichnet, dass** die erste kleinere Wärmekapazität durch eine geringere Trägermaterial- und/oder eine geringere Beschichtungsdicke erzielt ist.

6. Abgasanlage nach Patentanspruch 5,
**dadurch gekennzeichnet, dass** der erste NOx-Speicherkatalysator ein kleineres Volumen als der zweite NOx-Speicherkatalysator aufweist.

7. Abgasanlage nach einem der Patentansprüche 5 oder 6,
**dadurch gekennzeichnet, dass** jeder NOx-Speicherkatalysator eine Temperaturmessstelle aufweist.

8. Abgasanlage nach einem der Patentansprüche 5 bis 7,
**dadurch gekennzeichnet, dass** der NOx-Speicherkatalysator bei Temperaturen oberhalb der ersten Aktivitätstemperatur NOx einlagert und/oder auslagert.

9. Abgasanlage nach einem der Patentansprüche 5 bis 8,
**dadurch gekennzeichnet, dass** der NOx-Speicherkatalysator bei Temperaturen oberhalb der zweiten Aktivitätstemperatur NOx einlagert und/oder auslagert und konvertiert.

## Claims

1. A method of operating an internal combustion engine with an exhaust system after a cold start, comprising a first and a second NOx storage catalytic converter, the second being disposed behind the first in the flow direction, wherein each NOx storage converter has a heat capacity and the heat capacity of the first NOx storage converter is less than the heat capacity of the second NOx storage converter and wherein at temperatures above a first activity temperature the NOx storage converter stores and/or discharges NOx and wherein at temperatures above a second activity temperature the NOx storage converter stores and/or discharges and converts NOx if the temperature of the NOx storage converter is below the first activity temperature before the engine starts, **characterised by** the following steps:
- starting the engine with a stoichiometric fuel-air mixture and continuous measurement of the temperature of the first NOx storage converter,
- operating the engine with a lean fuel-air mixture when the temperature of the first NOx storage converter is above the second activity temperature and
- regenerating the NOx storage converters when the temperature of the first NOx storage converter is above the second activity temperature.

2. A method of operating an internal combustion engine with an exhaust system after a warm start, comprising a first and a second NOx storage catalytic converter, the second being disposed behind the first in the flow direction, wherein each NOx storage converter has a heat capacity and the heat capacity of the first NOx storage converter is less than the heat capacity of the second NOx storage converter and wherein at temperatures above a first activity temperature the NOx storage converter stores and/or discharges NOx and wherein at temperatures above a second activity temperature the NOx storage converter stores and/or discharges and converts NOx if before the engine starts the first NOx storage converter has a temperature below the second activity temperature and the second NOx storage converter has a temperature above the first activity temperature,
**characterised by** the following steps:
- starting the engine and continuous measurement of the temperature of the second NOx storage converter,
- operating the engine with a lean fuel-air mixture, and
- regenerating the NOx storage converters when the temperature of the second NOx storage converter is above the second activity temperature.

3. A method of operating an internal combustion engine with an exhaust system comprising a first and a second NOx storage converter, the second being behind the first in the flow direction, wherein each NOx storage converter has a heat capacity and the heat capacity of the first NOx storage converter is less than the heat capacity of the second NOx storage converter and wherein at temperatures above a first activity temperature the NOx storage converter stores and/or discharges NOx and wherein at temperatures above a second activity temperature the NOx storage converter stores and/or discharges and converts NOx if both NOx storage converters have a temperature above the second activity temperature,
**characterised by** the following steps:
- continuous measurement of the temperature of the first NOx storage converter,
- continuous measurement of the temperature of the second NOx storage converter when the temperature of the first NOx storage converter falls below the second activity temperature,
- operating the engine with a lean fuel-air mixture when the temperature of the second NOx storage converter is above the second activity temperature,
- operating the engine with a lean fuel-air mixture when the temperature of the second NOx storage converter falls below the second activity temperature and
- regenerating the NOx storage converters when the temperature of the second NOx storage converter is above the second activity temperature.

4. A method according to any of the preceding claims, **characterised in that** the converter is heated when necessary.

5. An exhaust system for operating an internal combustion engine according to any of the previous claims, wherein each NOx storage converter has a heat capacity, wherein the heat capacity of the first NOx storage converter is less than the heat capacity of the second NOx storage converter and wherein the NOx storage converters comprise at least one substrate with a coating,
**characterised in that** the first and smaller heat capacity is obtained with a thinner substrate and/or a thinner coating.

6. An exhaust system according to claim 5, **characterised in that** the first NOx storage converter has a smaller volume than the second NOx storage converter.

7. An exhaust system according to claim 5 or 6, **characterised in that** each NOx storage converter has a temperature-measuring point.

8. An exhaust system according to any of claims 5 to 7, **characterised in that** at temperatures above the first activity temperature the NOx storage converter stores and/or discharges NOx.

9. An exhaust system according to any of claims 5 to 8, **characterised in that** at temperatures above the second activity temperature the NOx storage converter stores and/or discharges and converts NOx.

## Revendications

1. Procédé pour le fonctionnement d'un moteur à combustion interne avec un dispositif d'échappement après un démarrage à froid qui présente un premier catalyseur accumulateur de NOx et un second catalyseur accumulateur de NOx disposé derrière le premier dans le sens de l'écoulement, chaque catalyseur de NOx présentant une capacité thermique et la capacité thermique du premier catalyseur de NOx étant inférieure à la capacité thermique du second catalyseur de NOx, selon lequel le catalyseur de NOx stocke et/ou déstocke le NOx à des températures supérieures à une première température d'activité et le catalyseur accumulateur de NOx stocke et/ou déstocke et convertit le NOx à des températures supérieures à une seconde température d'activité lorsque avant un démarrage du moteur à combustion interne, la température des catalyseurs de NOx est inférieure à la première température d'activité,
**caractérisé par**
les étapes de procédé suivantes :
- démarrage du moteur à combustion interne avec un mélange carburant-air stoechiométrique et détermination continue de la température du premier catalyseur accumulateur de NOx,
- fonctionnement du moteur à combustion interne avec un mélange carburant-air pauvre lorsque la température du premier catalyseur accumulateur de NOx est supérieure à la seconde température d'activité, et
- lorsque la température du premier catalyseur accumulateur de NOx est supérieure la seconde température d'activité, régénération des deux catalyseurs accumulateurs de NOx.

2. Procédé pour le fonctionnement d'un moteur à combustion interne avec un dispositif d'échappement après un démarrage à chaud qui présente un premier catalyseur accumulateur de NOx et un second catalyseur accumulateur de NOx disposé derrière le premier dans le sens de l'écoulement, chaque catalyseur accumulateur de NOx présentant une capacité thermique et la capacité thermique du premier catalyseur accumulateur de NOx étant inférieure à la capacité thermique du second catalyseur accumulateur de NOx, selon lequel le catalyseur accumulateur de NOx stocke et/ou déstocke le NOx à des températures supérieures à une première température d'activité, et le catalyseur accumulateur de NOx stocke et/ou déstocke et convertit le NOx à des températures supérieures à une seconde température d'activité lorsque, avant un démarrage du moteur à combustion interne, le premier catalyseur accumulateur de NOx présente une température inférieure à la seconde température d'activité et le second catalyseur accumulateur de NOx présente une température supérieure à la première température d'activité,
**caractérisé par**
les étapes de procédé suivantes :
- démarrage du moteur à combustion interne et détermination continue de la température du second catalyseur accumulateur de NOx,
- fonctionnement du moteur à combustion interne avec un mélange carburant-air pauvre, et
- lorsque la température du second catalyseur accumulateur de NOx est supérieure à la seconde température d'activité, régénération des catalyseurs de NOx.

3. Procédé pour le fonctionnement d'un moteur à combustion interne avec un dispositif d'échappement qui présente un premier catalyseur accumulateur de NOx et un second catalyseur accumulateur de NOx disposé derrière le premier dans le sens de l'écoulement, chaque catalyseur accumulateur de NOx présentant une capacité thermique et la capacité thermique du premier catalyseur accumulateur de NOx étant inférieure à la capacité thermique du second catalyseur accumulateur de NOx selon lequel le catalyseur accumulateur de NOx stocke et/ou déstocke le NOx à des températures supérieures à une première température d'activité et le catalyseur accumulateur de NOx stocke et/ou déstocke et convertit le NOx à des températures supérieures à une seconde température d'activité lorsque les deux catalyseurs de NOx présentent une température supérieure à la seconde température d'activité,
**caractérisé par**
les étapes de procédé suivantes :
- détermination continue de la température du premier catalyseur accumulateur de NOx,
- lorsque la température du premier catalyseur accumulateur de NOx tombe en dessous de la seconde température d'activité, détermination continue de la température du second catalyseur accumulateur de NOx,
- lorsque la température du second catalyseur accumulateur de NOx est supérieure à la seconde température d'activité, fonctionnement du moteur à combustion interne avec un mélange carburant-air pauvre,
- lorsque la température du second catalyseur accumulateur de NOx tombe en dessous de la seconde température d'activité et est supérieure à la première température d'activité, fonctionnement du moteur à combustion interne avec un mélange carburant-air pauvre,
- lorsque la température du second catalyseur accumulateur de NOx est supérieure à la seconde température d'activité, régénération des catalyseurs de NOx.

4. Procédé selon l'une quelconque des revendications précédentes
**caractérisé en ce qu'**
un réchauffement des catalyseurs est effectué si nécessaire.

5. Dispositif d'échappement pour le fonctionnement d'un moteur à combustion interne selon l'une quelconque des revendications précédentes, chaque catalyseur accumulateur de NOx présentant une capacité thermique, la capacité thermique du premier catalyseur accumulateur de NOx étant inférieure à la capacité thermique du second catalyseur accumulateur de NOx et les catalyseurs accumulateurs de NOx étant constitués d'au moins un matériau de support avec un revêtement,
**caractérisé en ce que**
la première capacité thermique moindre est obtenue grâce à une épaisseur de matériau de support moindre et/ou à une épaisseur de revêtement moindre.

6. Dispositif d'échappement selon la revendication 5,
**caractérisé en ce que**
le premier catalyseur accumulateur de NOx présente un volume plus petit que le second catalyseur accumulateur de NOx.

7. Dispositif d'échappement selon l'une quelconque des revendication 5 ou 6,
**caractérisé en ce que**
chaque catalyseur accumulateur de NOx présente un point de mesure de température.

8. Dispositif d'échappement selon l'une quelconque des revendications 5 à 7,
**caractérisé en ce que**
le catalyseur accumulateur de NOx stocke et/ou déstocke le NOx à des températures supérieures à la première température d'activité.

9. Dispositif d'échappement selon l'une quelconque des revendications 5 à 8,
**caractérisé en ce que**
le catalyseur accumulateur de NOx stocke et/ou déstocke et convertit le NOx à des températures supérieures à la seconde température d'activité.
